# EUROPÄISCHE PATENTSCHRIFT

(11) **EP 2 033 859 B1**
(45) Veröffentlichungstag und Bekanntmachung des Hinweises auf die Patenterteilung: **20.02.2013**
(21) Anmeldenummer: 08104030.5
(22) Anmeldetag: 20.05.2008
(51) Int. Cl.: B60R 5/00

(54) **Verriegelungseinrichtung für eine Welle eines Lenksystems**
Locking device for a shaft of a steering system
Dispositif de verrouillage pour un arbre de système de guidage

(30) Priorität: 04.09.2007 DE 102007000943
(43) Veröffentlichungstag der Anmeldung: 11.03.2009
(73) Patentinhaber: ZF-Lenksysteme GmbH, 73527 Schwäbisch Gmünd (DE)
(72) Erfinder: Rupp, Arthur, 73460 Hüttlingen (DE); Hörsch, Jürgen, 74417 Gschwend (DE); Reimann, Gerd, 74232 Abstatt (DE); Domhan, Achim, 73529 Schwäbisch Gmünd (DE)

(56) Entgegenhaltungen:
- EP-A- 1 870 313
- WO-A-2006/039825
- DE-A1- 10 323 042

## Beschreibung

Die Erfindung betrifft eine Verriegelungseinrichtung für eine Welle eines Lenksystems mit einem elektromagnetischen Hubmagneten, nach dem Oberbegriff des Anspruchs 1.

Die DE 103 23 042 A1 beschreibt ein Lenksystem für ein Fahrzeug, welches eine elektromechanische Verriegelungseinrichtung mit einem Hubmagneten aufweist, der bei einem Fehler- oder Mißbrauchsfall ein Sperrelement beaufschlagt und zu einer kraftschlüssigen und formschlüssigen Verriegelung einer Welle eines Überlagerungsgetriebes führt. Ein Energiespeicher in Form einer Schraubenfeder sorgt für einen entriegelten Zustand der Verriegelungseinrichtung. Es ist aus einer früheren noch unveröffentlichten Anmeldung der Anmelderin eine Verriegelungseinrichtung für eine Welle eines Lenksystems eines Fahrzeugs mit einem elektromagnetischen Hubmagneten entnehmbar, welcher ein Sperrelement in der Weise beaufschlagt, dass dieses die Welle formschlüssig an einem fahrzeugfesten Bauteil festlegt und löst, wobei ein Energiespeicher zur automatischen Verriegelung der Welle bei einer Fehlfunktion in dem Lenksystem vorgesehen ist, der zumindest eine Schraubenfeder aufweist und die Schraubenfeder auf ihrer Innenseite oder Außenseite axial und radial an einem Führungselement anliegt.

Das Dokument WO 2006/039825 offenbart eine Verriegelungseinrichtung gemäß dem Oberbegriff des Anspruchs 1.

Die noch unveröffentlichte DE 10 2007 000943 beschreibt eine Verriegelungseinrichtung für eine Welle eines Lenksystems, wobei der Energiespeicher eine Schraubenfeder aufweist, deren Windungsabstand in vorgespanntem Zustand zu dem Drahtdurchmesser der Windung ein Verhältnis von 0,5 bis 1,5 bildet, wodurch eine technische Maßnahme getroffen ist, daß bei einem etwaigen Bruch der Schraubenfeder sich die Bruchteile der Schraubenfeder nicht ineinander drehen können und die Vorspannung in dem Energiespeicher erhalten bleibt. Damit ist auch bei einem Federbruch ein sicheres Verriegeln der Verriegelungseinrichtung gewährleistet.

Die bekannten Verriegelungseinrichtungen haben jedoch dennoch den Nachteil, dass deren Sperrelement im Fehlerfall, wenn dieses zur Verriegelung der Welle herangezogen wird, brechen kann.

Der Erfindung liegt die Aufgabe zugrunde, eine Verriegelungseinrichtung für eine Welle eines Lenksystems zu schaffen, die betriebessicher ist.

Die Aufgabe wird mit einer Verriegelungseinrichtung mit den Merkmalen des Anspruchs 1 gelöst.

Dadurch, dass das Sperrelement vorzugsweise bolzenähnlich gebildet ist und mit einem größeren Durchmesser einen Flansch eines Gehäuses der Verriegelungseinrichtung durchragt, als der Durchmesser, den das Sperrelement in dem Gehäuse des Hubmagneten hat, und die Position des Übergangs von dem größeren Durchmesser zu dem kleineren Durchmesser relativ zu einem dem Sperrelement zugewandten Ende eines das Sperrelement beaufschlagenden Kolbens im Verhältnis zu dem größeren Durchmesser wie wₐ/d₂ = 0 bis 3 steht, ist eine konstruktive Maßnahme getroffen, die bruchgefährdete Durchmesser- Sprungstelle außerhalb des Hauptkraftflusses in dem Sperrelement zu legen. Das Sperrelement verliert dadurch seine Bruchgefährdung sicher.

Bevorzugte Ausführungen ergeben sich aus den Unteransprüchen.

Eine wichtige Maßnahme zur Verbesserung der Betriebssicherheit der Verriegelungseinrichtung ist, dass der Energiespeicher vorzugsweise aus zwei parallel geschalteten Schraubenfedern gebildet ist, die Windungen aufweisen, welche aus einem aus einer Mehrzahl von Litzen gebildeten Stahlseil bestehen. Eine solche Schraubenfeder ist extrem wenig bruchgefährdet. Die erste Schraubenfeder kann vorzugsweise auf ihrer Innenseite auf einem Dorn geführt werden, die zweite Schraubenfeder kann zweckmäßigerweise auf ihrer Außenseite in einer Hülse geführt sein, wobei sich die Schraubenfedern im Betrieb der Verriegelungseinrichtung bevorzugt nicht berühren.

Bevorzugt sind die Steigungsrichtungen der Schraubfedern invers zueinander. In einem besonders bevorzugten Ausführungsbeispiel sind die Schraubenfedern als zylindrische Schraubendruckfedern ausgebildet.

Die Verriegelungseinrichtung ist bevorzugt in einer elektrischen Hilfskraftlenkung und in einem elektrischen Überlagerungssteller eingebaut, dessen Überlagerungsgetriebe ein Wellgetriebe ist.

Die Funktion eines Überlagerungsgetriebes in einem Lenksystem eines Fahrzeugs besteht darin, einen Lenkwinkel unabhängig von einem Fahrer des Fahrzeugs über eine Steuerungs- und/oder Regelungseinrichtung mittels Stellgrößen, die zum Beispiel von einem Fahrzeugdynamikprogramm (ESP-Regler) erzeugt werden können, einzustellen. Die Übersetzung der Servo- oder Hilfskraftlenkung setzt sich aus den Übersetzungen des jeweiligen Lenkgetriebes und des Überlagerungsgetriebes zusammen. Ein Überlagerungsgetriebe, in dem die Verriegelungseinrichtung eingebaut ist, weist zu diesem Zweck eine erste Getriebeeingangswelle und eine zweite Getriebeeingangswelle auf und überlagert die an den beiden Getriebeeingangswellen auftretenden Drehwinkel auf eine Getriebeausgangswelle, die mit einem Lenkgetriebe und lenkbaren Rädern des Fahrzeugs wirkverbunden ist. Die erste Getriebeeingangswelle ist bevorzugt mit einer Lenkhandhabe wirkverbunden und die zweite Getriebeeingangswelle ist bevorzugt mit einer Abtriebswelle eines Servomotors drehfest verbunden.

Die Verrieglungseinrichtung ist bevorzugt aus einem Innenring gebildet, der drehfest mit der zweiten Getriebeeingangswelle verbunden ist und einen oder mehrere, vorzugsweise radiale Vorsprünge trägt, die unter Zwischenlage eines Elements mit elastomeren Eigenschaften in eine oder mehrere Ausnehmungen eines den Innenring radial umschließenden Außenrings eingreifen. Der Außenring weist an seinem radialen Umfang taschenartige Vertiefungen mit ein oder mehreren Vorsprüngen auf, wobei die Vorsprünge als Anschläge für das Sperrelement der Verriegelungseinrichtung dienen, mit dem der Außenring an einem fahrzeugfesten Gehäuse des Überlagerungsgetriebes oder des Servomotors formschlüssig lösbar festgelegt werden kann. Die Vorsprünge haben unterschiedliche Flankenhöhen.

Die geringste Flankenhöhe ist in einem besonders bevorzugten Ausführungsbeispiel etwa 0,3 mm und der Höhenunterschied der Flankenhöhen ist größer als etwa 0,3 mm. Das Überlagerungsgetriebe ist bevorzugt als Wellgetriebe oder harmonic - drive gebildet.

Die Erfindung wird nun näher anhand eines Ausführungsbeispiels beschrieben und anhand der beiliegenden Zeichnung wiedergegeben. In der Zeichnung zeigt:
- Fig. 1: einen Längsschnitt durch ein Überlagerungsgetriebe mit einer erfindungsgemäßen Verriegelungseinrichtung in einer elektrischen Hilfskraftlenkung,
- Fig. 2: einen Querschnitt durch das Überlagerungsgetriebe in Fig. 1 entlang der Linie II - II
- Fig. 3: eine perspektivische Ansicht einer Schraubenfeder in der Verriegelungseinrichtung,
- Fig. 4: ein Detail IV in Fig. 2
- Fig. 5: einen Querschnitt durch einen Außenring der Verriegelungseinrichtung.

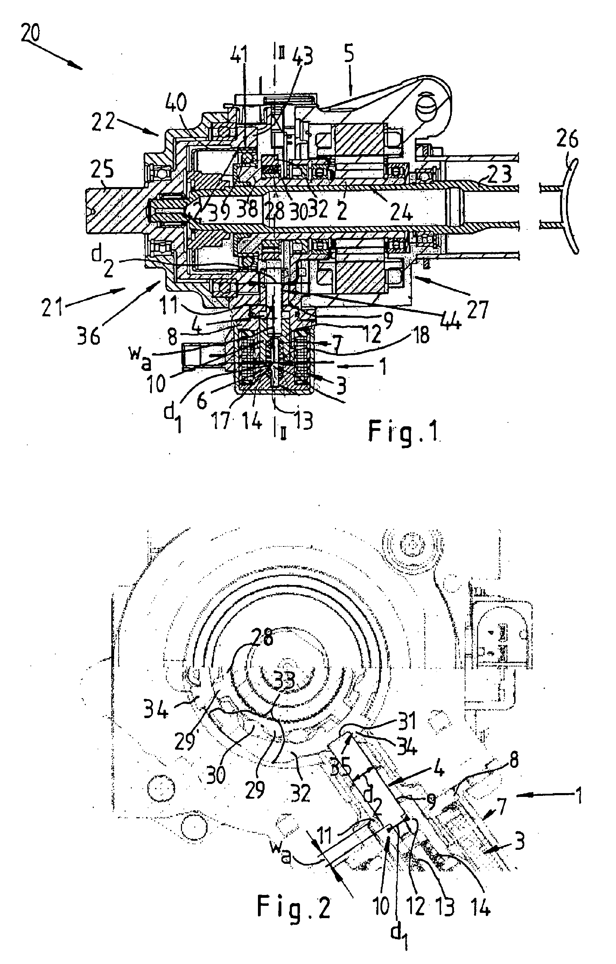

In Fig. 1 ist in einem Längsschnitt ein Überlagerungsgetriebe 22 mit einem elektrischen Servomotor 27 gezeigt. Der Servomotor 27 ist als Hohlwellenmotor gebildet und stützt sich an einem fahrzeugfesten, insbesondere karosseriefesten Bauteil 5 ab. Das Überlagerungsgetriebe 22 ist als Wellgetriebe 37 ausgeführt und dient zur Überlagerung eines auf eine erste Getriebeeingangswelle 23 aufgebrachten Lenkwinkels mit einem, von dem Servomotor 27 auf eine zweite Getriebeeingangswelle 24 aufgebrachten Drehwinkel. Die erste Getriebeeingangswelle 23 ist drehfest mit einer Lenkhandhabe 26 verbunden. Die zweite Getriebeeingangswelle 24 ist als Hohlwelle, auf der Rotormagnete des Servomotors 27 festgelegt sind, ausgeführt. Auf eine Getriebeausgangswelle 25 wird der Summenwinkel der beiden Getriebeeingangswellen 23,24 aufgeprägt. Die zweite Getriebeeingangswelle 24 umschließt die erste Getriebeeingangswelle 23 und ist an Wälzlagern, die sich an einem gemeinsamen, mehrteiligen Gehäuse 37 des Servomotors 27 abstützen, gelagert. Die Hohlwelle ist einstückig mit einem exzentrischen Antriebskern 38 ausgeführt. Um den vorzugsweise ellipsenförmigen Umfang des exzentrischen Antriebskernes 38 ist ein flexibles Kugellager 39 aufgezogen. Der exzentrische Antriebskern 38 greift mit seiner axialen Erstreckung in eine aus elastischem Stahlblech gebildete, topfförmige, radialflexible Abrollbuchse 40 (flex - spline) ein. Die radialflexible Abrollbuchse 40 weist eine Außenmantelfläche 41 auf, die im axialen Bereich des Kugellagers 39 eine Außenverzahnung trägt. Diese Außenverzahnung greift unter Wirkung der ellipsenförmigen Aufweitung der radialflexiblen Abrollbuchse 40 mit zwei Umfangsabschnitten in eine Innenverzahnung an einer zylindrischen Stützfläche 42 eines drehfest mit der Getriebeausgangswelle 25 verbundenen Stützring 43 (circular -spline) ein. Der Stützring 43, die Getriebeausgangswelle 25 und die Getriebeeingangswellen 23, 24 sind konzentrisch angeordnet. Die mit der Lenkhandhabe 26 wirkverbundene erste Getriebeeingangswelle 23 ist drehfest mit der radialflexiblen Abrollbuchse 40 verbunden. Bei Rotation des exzentrischen Antriebskerns 38 erfolgt die ellipsenförmige Aufweitung im fortlaufenden Wechsel entlang der Innenverzahnung an der zylindrischen Stützfläche 42. Der innenverzahnte Stützring 43 weist eine größere Zähnezahl als die radialflexible Abrollbuchse 40 auf, wodurch eine Verdrehung des Stützrings 43 und damit der Getriebeausgangswelle 25 relativ zu der ersten Getriebeeingangswelle 23 pro Umdrehung des exzentrischen Antriebskerns 38 um die Differenz der Zähnezahl erfolgt. Somit ist durch den Servomotor 27 eine Winkelüberlagerung, die insbesondere von Fahrt- und Fahrzeugparametern abhängig sein kann, durchführbar.

Um bei einer Fehlfunktion oder bei einem Ausfall des Servomotors 27 zu verhindern, dass die eine Hohlwelle des elektrischen Servomotors 27 bildende Welle 2 dreht und somit eine Übertragung eines Drehwinkels der ersten Getriebeeingangswelle 23 und der Lenkhandhabe 26 über die radialflexible Abrollbuchse 40 auf den Stützring 43 und die Getriebeausgangswelle 25 gänzlich unmöglich gemacht und das Fahrzeug nicht steuerbar ist, ist eine elektromagnetische Verriegelungseinrichtung 1, wie sie die Figuren 1 und 2 zeigen, zur formschlüssigen, lösbaren Festlegung der zweiten Getriebeeingangswelle 24 an das Gehäuse 37 vorgesehen.

Wie insbesondere Fig. 2 zeigt, ist die elektromagnetische Verriegelungseinrichtung 1 aus einem Innenring 28 aufgebaut, der mit Hilfe einer Kerbzahnwellenverbindung auf der zweiten Getriebeeingangswelle 24 als Hohlwelle festgelegt ist. Der Innenring 28 weist mit 120 ° Versatz zueinander im Wechsel je drei stiftförmige Vorsprünge 29' und drei höckerförmige Vorsprünge 29 auf, die in insgesamt sechs Ausnehmungen 31 eines Außenrings 32 der den Innenring 28 radial umgibt, eingreifen.

Die stiftförmigen Vorsprünge 29, weisen streng radial verlaufende Anschlagsflächen auf und liegen mit ihrer Umfangsfläche an den Ausnehmungen 31 gleitend an, wodurch der Anschlag 32 zentriert ist. Die für die stiftförmigen Vorsprüngen 29 , vorgesehenen Ausnehmungen 31 haben streng radial und axial verlaufende Anschlagsflächen. Die höcker- oder nockenförmigen Vorsprünge 29 kommen in Ausnehmungen zu liegen, die tangential breiter sind, als die Ausnehmungen 31 für die stiftförmigen Vorsprünge 29 , und haben radiales Spiel in den Ausnehmungen 31.

Ein Element 30 mit elastomeren Eigenschaften umgibt ringförmig den Innenring 28 und die Anschlagsflächen der stiftförmigen und höckerförmigen Vorsprünge 29,29' wobei die höckerförmigen Vorsprünge 29 radial von dem Element 30 mit elastomeren Eigenschaften umgeben sind.

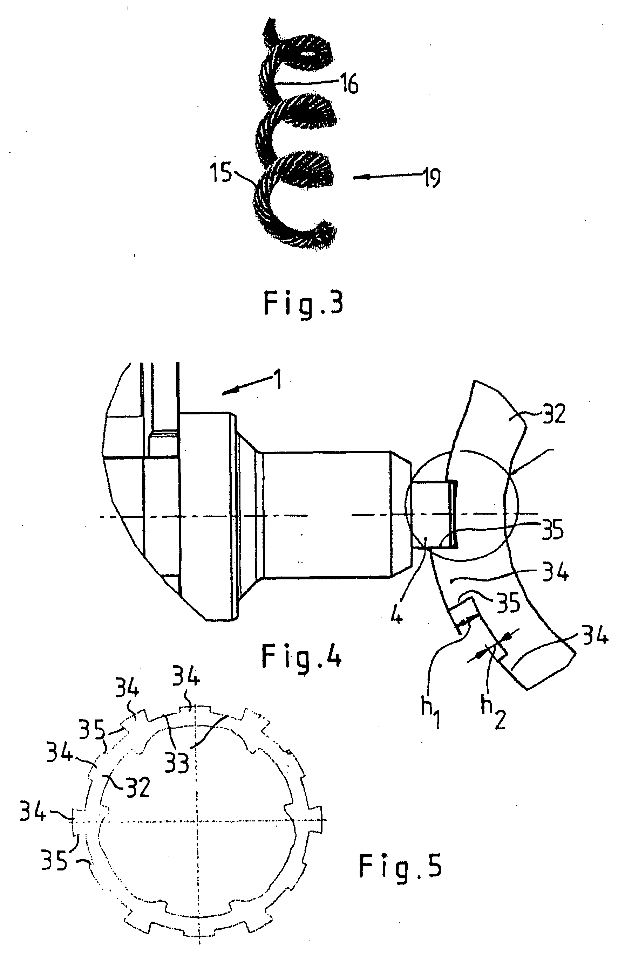

Der Aussenring 32 weist in dem in den Figuren 1 und 2 gezeigten Ausführungsbeispiel in seiner äußeren Umfangsfläche der taschenartigen Vertiefungen 33 auf. In der Mitte jeder taschenförmigen Vertiefung 33 ist ein Vorsprung 34, der als Anschlag 35 für ein Sperrelement 4 der elektromagnetischen Verriegelungseinrichtung 1 dient, radial hervorragend. Zu beiden Seiten eines jeden Vorsprungs 34 weist der Radius in tangentialer Richtung des Aussenrings 32 einen gleichbleibenden Wert auf um dann einen positiven Sprung aufzuweisen. Dadurch ist eine Vertiefung geschaffen, in die die Spitze des Sperrelement 4 spielfrei einfallen kann und den Aussenring 32 sicher in dem Gehäuse 37 formschlüssig festlegen kann. Wie auch die Figuren 4 und 5 zeigen, sind die Flankenhöhen h₁, h₂ unterschiedlich. Die Flankenhöhe h₂ der Vertiefung 33 ist geringer als die Flankenhöhe h₁, wodurch ein sicheres Einfallen des Sperrelement 4 erfolgen kann und den Aussenring 32 sicher an dem Gehäuse 38 formschlüssig festlegen kann.

Wird das als Stift mit einem Anker oder Kolben 12 eines elektromagnetischen Hubmagneten 3 gebildete Sperrelement 4 radial auf den Außenring 32 bewegt, so kann das Sperrelement 4 zu beiden Seiten der Vorsprünge 34 in Abhängigkeit von der Drehrichtung des elektrischen Servomotors 27 in die Vertiefungen 33 fallen und an dem Vorsprung 34 verriegeln. Ein Energiespeicher 6, der aus zwei radial ineinander liegenden Schraubenfedern 13,14 besteht, dient zur automatischen Verriegelung bei Ausfall der elektromagnetischen Verriegelungseinrichtung 1. Die erste Schraubenfeder 13 liegt mit ihrer Innenseite 17 an einem koaxial zu dem Sperrelement 4 in einem Gehäuse 7 für den Hubmagneten 3 gehaltenen Dorn 45 an, während die zweite Schraubenfeder 14 an ihrer Außenseite 18 mittels einem als Hülse gebildeten Führungselement anliegt. Dadurch berühren sich beide als Schraubendruckfedern 19 gebildete Federn nicht.

Wie Fig. 3 zeigt, sind die Schraubenfedern 13,14 durch ein gewundenes Drahtseil 16, das aus einer Anzahl von Stahllitzen 15 gebildet ist, hergestellt und extrem bruchsicher.

Um ein Verbiegen des als zylindrischen Bolzen gebildeten Sperrelements 4 im Missbrauchsfall zu verhindern, ist das Sperrelement 4 mit einem größeren Durchmesser d₂ über einen von einem Befestigungsflansch 8 des Gehäuses 7 definierten Ebene mit Durchgangsöffnung 3 in dem Gehäuse 7 geführt und verjüngt sich erst an einem Übergang 10 zu einem kleineren Durchmesser d₁. Der axiale Abstand wₐ oder die axiale Position des Übergangs 10 von einem axialen Ende 11 des Kolbens 12 steht in einem Verhältnis zu dem größeren Durchmesser d₂ des Sperrelements 4 von 0 bis 3.

### Bezugszeichenliste

- 1: Verriegelungseinrichtung
- 2: Welle
- 3: Hubmagnet
- 4: Sperrelement
- 5: Bauteil, fahrzeugfest
- 6: Energiespeicher
- 7: Gehäuse
- 8: Flansch
- 9: Durchgangsöffnung
- 10: Übergang
- 11: Ende, v. 12
- 12: Kolben
- 13: Schraubenfeder, erste
- 14: Schraubenfeder, zweite
- 15: Litze
- 16: Drahtseil
- 17: Innenseite
- 18: Außenseite
- 19: Schraubendruckfeder
- 20: Lenksystem
- 21: Hilfskraftlenksystem, elektrisch
- 22: Überlagerungsgetriebe
- 23: Getriebeeingangswelle, erste
- 24: Getriebeeingangswelle, zweite
- 25: Getriebeausgangswelle
- 26: Lenkhandhabe
- 27: Servomotor
- 28: Innenring
- 29,29': Vorsprung
- 30: Element
- 31: Ausnehmung
- 32: Aussenring
- 33: Vertiefung
- 34: Vorsprung
- 35: Anschlag
- 36: Wellgetriebe
- 37: Gehäuse
- 38: Antriebskern, exzentrisch
- 39: Kugellager, flexibel
- 40: Abrollbuchse, radialflexibel
- 41: Außenmantelfläche
- 42: Stützfläche
- 43: Stützring
- 44: Dorn

- d₁: Durchmesser
- d₂: Durchmesser
- wₐ: Position, axial
- h₁: Flankenhöhe
- h₂: Flankenhöhe

## Patentansprüche

1. Verriegelungseinrichtung für eine Welle (2) eines Lenksystems eines Fahrzeugs, mit einem elektromagnetischen Hubmagneten (3), welcher ein Sperrelement (4) in der Weise beaufschlagt, dass die Welle (2) formschlüssig lösbar an einem fahrzeugfesten Bauteil (5) festlegbar ist, und mit einem Energiespeicher (6) zur automatischen Verriegelung der Welle ( 2) bei einer Fehlfunktion des Lenksystems, der das Sperrelement (4) beaufschlagt, wobei der Hubmagnet (3) sich mit dem Sperrelement (4) in einem Gehäuse (7) abstützt, an welchem ein Flansch (8) mit einer Durchgangsöffnung (9) für das Sperrelement (4) festgeleg ist **dadurch gekennzeichnet, dass** das Sperrelement (4) mit einem größeren Durchmesser (d₂) den Flansch (8) durchragt, als ein kleiner Durchmesser (d₁) den das Sperrelement (4) in dem Gehäuse (7) des Hubmagneten (3) hat, wobei die axiale Position (wₐ) des Übergangs (10) von dem größeren Durchmesser (d₂) zu dem kleineren Durchmesser (d₁) relativ zu einem dem Sperrelement (4) zugewandten Ende (11) eines das Sperrelement (4) beaufschlagenden Kolbens (12) im Verhältnis zu dem größeren Durchmesser (d₂) wie wₐ / d₂ = 0 bis 3 steht, und der Energiespeicher (6) eine erste Schraubenfeder (13) und eine zweite Schraubenfeder (14) aufweist.

2. Verriegelungseinrichtung nach Anspruch 1, **dadurch gekennzeichnet, dass** die erste Schraubenfeder (13) des Energiespeichers (6) aus einem eine Mehrzahl von Litzen (15) aufweisenden Drahtseil (16) gebildet ist.

3. Verriegelungseinrichtung nach Anspruch 1, **dadurch gekennzeichnet dass** die erste Schraubenfeder (13) und die zweite Schraubenfeder (14) des Energiespeichers (6) aus einem eine Mehrzahl von Litzen (15) aufweisenden Drahtseil (16) gebildet ist.

4. Verriegelungseinrichtung nach einem der Ansprüche 1 bis 3, **dadurch gekennzeichnet, dass** die erste Schraubenfeder (13) und die zweite Schraubenfeder (14) parallelgeschaltet sind.

5. Verriegelungseinrichtung nach einem der Ansprüche 1 bis 3, **dadurch gekennzeichnet, dass** die innere, erste Schraubenfeder (13) auf ihrer Innenseite (17) geführt ist und die zweite Schraubenfeder (14) auf ihrer Außenseite (18) geführt ist.

6. Verriegelungseinrichtung nach einem der Ansprüche 1 bis 5, **dadurch gekennzeichnet, dass** die Schraubenfedern (13,14) sich nicht berühren.

7. Verriegelungseinrichtung nach einem der Ansprüche 1 bis 6, **dadurch gekennzeichnet, dass** die Steigungsrichtung der ersten Schaubenfeder (13) entgegengesetzt zu der Steigungsrichtung der zweiten Schraubenfeder (14) ist.

8. Verriegelungseinrichtung nach einem der Ansprüche 1 bis 7, **dadurch gekennzeichnet, dass** die Schraubenfedern (13,14) Schraubendruckfedern (19) sind.

9. Verriegelungseinrichtung nach einem der Ansprüche 1 bis 8, **dadurch gekennzeichnet, dass** das Lenksystem (20) ein elektrisches Hilfskraftlenksystem ist.

10. Verriegelungsseinrichtung nach einem der Ansprüche 1 bis 9, **dadurch gekennzeichnet, dass** die Welle (2) Teil eines Überlagerungsgetriebes (22) ist.

11. Verriegelungseinrichtung nach Anspruch 10, **dadurch gekennzeichnet, dass** das Überlagerungsgetriebe (22) eine erste Getriebeeingangswelle (23) und eine zweite Getriebeeingangswelle (24) zur Überlagerung der an den beiden Getriebeeingangswellen (23,24) auftretenden Drehwinkel auf eine Getriebeausgangswelle (25) des Überlagerungsgetriebes (22) aufweist, wobei die erste Getriebeeingangswelle (23) mit einer Lenkhandhabe (26) wirkverbunden ist und die zweite Getriebeeingangswelle (24) mit einem Servomotor (27) wirkverbunden ist und dass die zweite Getriebeeingangswelle (24) einen Bund aufweist oder mit einem Innenring (28) drehfest verbunden ist, der einen oder mehrere radiale und/oder axiale Vorsprünge (29) trägt, die unter Zwischenlage eines Elements (30) mit elastomeren Eigenschaften in ein oder mehrere Ausnehmungen (31) eines Aussenrings (32) einen Formschluß ermöglichend eingreifen, und der Aussenring (32) an seinem radialen und/oder axialen Umfang taschenartige Vertiefungen (33) mit ein oder mehreren Vorsprüngen (34) aufweist, die als Anschläge (35) für das Sperrelement (4) der Verriegelungseinrichtung (1) dienen, mit denen der Außenring (32) an dem fahrzeugfesten Bauteil (5) des Überlagerungsgetriebes (22) oder des Servomotors (27) formschlüssig lösbar festlegbar ist, **dadurch gekennzeichnet , dass** die Vorsprünge (34) unterschied-liche Flankenhöhen (h₁,h₂) aufweisen.

12. Verriegelungseinrichtung nach Anspruch 11, **dadurch gekennzeichnet, dass** die geringste Flankenhöhe (h₂) etwa 0,3 mm beträgt.

13. Verriegelungseinrichtung nach einem der Ansprüche 11 oder 12, **dadurch gekennzeichnet, dass** der Höhenunterschied der Flankenhöhen (h₁,h₂) mehr als 0,3 mm beträgt.

14. Verriegelungseinrichtung nach einem der Ansprüche 10 bis 13, **dadurch gekennzeichnet, dass** das Überlagerungsgetriebe (22) ein Wellgetriebe (36) ist.

## Claims

1. Locking device for a shaft (2) of a steering system of a vehicle, with an electromagnetic lifting magnet (3) which acts upon a blocking element (4) in such a way that the shaft (2) can be releasably secured positively to a component (5) fixed to the vehicle, and with an energy accumulator (6) for the automatic locking of the shaft (2) in the event of a malfunction of the steering system, which energy accumulator acts upon the blocking element (4), the lifting magnet (3) being supported by means of the blocking element (4) in a housing (7) to which a flange (8) with a through-orifice (9) for the blocking element (4) is secured, **characterized in that** the blocking element (4) projects with a larger diameter (d₂) through the flange (8) than a small diameter (d₁) which the blocking element (4) has in the housing (7) of the lifting magnet (3), the axial position (wₐ) of the transition (10) from the larger diameter (d₂) to the smaller diameter (d₁) being in the ratio to the larger diameter (d₂) of wₐ/d₂ = 0 to 3 in relation to an end (11), facing the blocking element (4), of a piston (12) acting upon the blocking element (4), and the energy accumulator (6) having a first helical spring (13) and a second helical spring (14).

2. Locking device according to Claim 1, **characterized in that** the first helical spring (13) of the energy accumulator (6) is formed from a wire rope (16) having a plurality of strands (15).

3. Locking device according to Claim 1, **characterized in that** the first helical spring (13) and the second helical spring (14) of the energy accumulator (6) are formed from a wire rope (16) having a plurality of strands (15).

4. Locking device according to one of Claims 1 to 3, **characterized in that** the first helical spring (13) and the second helical spring (14) are connected in parallel.

5. Locking device according to one of Claims 1 to 3, **characterized in that** the inner, first helical spring (13) is guided on its inside (17) and the second helical spring (14) is guided in its outside.

6. Locking device according to one of Claims 1 to 5, **characterized in that** the helical springs (13, 14) do not touch one another.

7. Locking device according to one of Claims 1 to 6, **characterized in that** the pitch direction of the first helical spring (13) is opposite to the pitch direction of the second helical spring (14).

8. Locking device according to one of Claims 1 to 7, **characterized in that** the helical springs (13, 14) are helical compression springs (19).

9. Locking device according to one of Claims 1 to 8, **characterized in that** the steering system (20) is an electrical power steering system.

10. Locking device according to one of Claims 1 to 9, **characterized in that** the shaft (2) is part of a transfer transmission (22).

11. Locking device according to Claim 10, **characterized in that** the transfer transmission (22) has a first transmission input shaft (23) and a second transmission input shaft (24) for transferring the rotary angles occurring on the two transmission input shafts (23, 24) to a transmission output shaft (25) of the transfer transmission (22), the first transmission input shaft (23) being operatively connected to a steering handle (26), and the second transmission input shaft (24) being operatively connected to a servomotor (27), and **in that** the second transmission input shaft (24) has a collar or is connected fixedly in terms of rotation to an inner ring (28) which carries one or more radial and/or axial projections (29) which, with an element (30) having elastomeric properties being interposed, engage into one or more recesses (31) of an outer ring (32) to allow positive connection, and the outer ring (32) having on its radial and/or axial circumference pocket-like depressions (33) with one or more projections (34) which serve as stops (35) for the blocking element (4) of the locking device (1) and by means of which the outer ring (32) can be releasably secured positively to the component (5), fixed to the vehicle, of the transfer transmission (22) or of the servomotor (27), **characterized in that** the projections (34) have different flank heights (h₁, h₂).

12. Locking device according to Claim 11, **characterized in that** the smallest flank height (h₂) amounts to about 0.3 mm.

13. Locking device according to either one of Claims 11 and 12, **characterized in that** the height difference in the flank heights (h₁, h₂) amounts to more than 0.3 mm.

14. Locking device according to one of Claims 10 to 13, **characterized in that** the transfer transmission (22) is a harmonic transmission (36).

## Revendications

1. Dispositif de verrouillage pour un arbre (2) d'un système de direction d'un véhicule, comprenant un aimant de levage électromagnétique (3) qui sollicite un élément de blocage (4) de telle sorte que l'arbre (2) puisse être fixé par complémentarité de formes de manière amovible à un composant (5) solidaire du véhicule, et comprenant un accumulateur d'énergie (6) pour le verrouillage automatique de l'arbre (2) lors d'un dysfonctionnement du système de direction, qui sollicite l'élément de blocage (4), l'aimant de levage (3) étant supporté avec l'élément de blocage (4) dans un boîtier (7) sur lequel est fixé une bride (8) dotée d'une ouverture traversante (9) pour l'élément de blocage (4), **caractérisé en ce que** l'élément de blocage (4) traverse la bride (8) avec un plus grand diamètre (d₂) qu'un plus petit diamètre (d₁) que présente l'élément de blocage (4) dans le boîtier (7) de l'aimant de levage (3), la position axiale (wₐ) de la transition (10) du plus grand diamètre (d₂) au plus petit diamètre (d₁) relativement à une extrémité (11), orientée vers l'élément de blocage (4), d'un piston (12) sollicitant l'élément de blocage (4) par rapport au plus grand diamètre (d₂) étant telle que wₐ / d₂ = 0 à 3, et l'accumulateur d'énergie (6) comprenant un premier ressort hélicoïdal (13) et un deuxième ressort hélicoïdal (14).

2. Dispositif de verrouillage selon la revendication 1, **caractérisé en ce que** le premier ressort hélicoïdal (13) de l'accumulateur d'énergie (6) est formé à partir d'un câble métallique (16) comprenant une pluralité de torons (15).

3. Dispositif de verrouillage selon la revendication 1, **caractérisé en ce que** le premier ressort hélicoïdal (13) et le deuxième ressort hélicoïdal (14) de l'accumulateur d'énergie (6) sont formés à partir d'un câble métallique (16) comprenant une pluralité de torons (15).

4. Dispositif de verrouillage selon l'une quelconque des revendications 1 à 3, **caractérisé en ce que** le premier ressort hélicoïdal (13) et le deuxième ressort hélicoïdal (14) sont montés en parallèle.

5. Dispositif de verrouillage selon l'une quelconque des revendications 1 à 3, **caractérisé en ce que** le premier ressort hélicoïdal (13) intérieur est guidé sur son côté intérieur (17) et le deuxième ressort hélicoïdal (14) est guidé sur son côté extérieur (18).

6. Dispositif de verrouillage selon l'une quelconque des revendications 1 à 5, **caractérisé en ce que** les ressorts hélicoïdaux (13, 14) ne sont pas en contact.

7. Dispositif de verrouillage selon l'une quelconque des revendications 1 à 6, **caractérisé en ce que** la direction de pente du premier ressort hélicoïdal (13) est opposée à la direction de pente du deuxième ressort hélicoïdal (14).

8. Dispositif de verrouillage selon l'une quelconque des revendications 1 à 7, **caractérisé en ce que** les ressorts hélicoïdaux (13, 14) sont des ressorts de compression hélicoïdaux (19).

9. Dispositif de verrouillage selon l'une quelconque des revendications 1 à 8, **caractérisé en ce que** le système de direction (20) est un système de direction assistée électrique.

10. Dispositif de verrouillage selon l'une quelconque des revendications 1 à 9, **caractérisé en ce que** l'arbre (2) fait partie d'une transmission à superposition (22).

11. Dispositif de verrouillage selon la revendication 10, **caractérisé en ce que** la transmission à superposition (22) comprend un premier arbre d'entrée de transmission (23) et un deuxième arbre d'entrée de transmission (24) pour la superposition des angles de rotation présents sur les deux arbres d'entrée de transmission (23, 24) sur un arbre de sortie de transmission (25) de la transmission à superposition (22), le premier arbre d'entrée de transmission (23) étant en liaison fonctionnelle avec une manette de direction (26) et le deuxième arbre d'entrée de transmission (24) étant en liaison fonctionnelle avec un servomoteur (27), et **en ce que** le deuxième arbre d'entrée de transmission (24) comprend un épaulement ou est relié de manière solidaire en rotation à une bague intérieure (28) qui porte une ou plusieurs saillies radiales et/ou axiales (29) qui, par l'intermédiaire d'un élément (30) présentant des propriétés élastomères, s'engagent dans un ou plusieurs évidements (31) d'une bague extérieure (32) en permettant un engagement par complémentarité de formes, et la bague extérieure (32) comprend sur sa périphérie radiale et/ou axiale des renfoncements de type poche (33) comprenant une ou plusieurs saillies (34) qui servent de butées (35) pour l'élément de blocage (4) du dispositif de verrouillage (1), à l'aide desquelles la bague extérieure (32) peut être fixée de manière amovible par complémentarité de formes au composant (5) solidaire du véhicule de la transmission à superposition (22) ou du servomoteur (27), **caractérisé en ce que** les saillies (34) présentent des hauteurs de flanc différentes (h₁, h₂) .

12. Dispositif de verrouillage selon la revendication 11, **caractérisé en ce que** la plus petite hauteur de flanc (h₂) vaut approximativement 0,3 mm.

13. Dispositif de verrouillage selon l'une quelconque des revendications 11 et 12, **caractérisé en ce que** la différence de hauteur des hauteurs de flanc (h₁, h₂) vaut plus de 0,3 mm.

14. Dispositif de verrouillage selon l'une quelconque des revendications 10 à 13, **caractérisé en ce que** la transmission à superposition (22) est une transmission harmonique (36).
